# EUROPÄISCHE PATENTSCHRIFT

(11) **EP 1 819 950 B1**
(45) Veröffentlichungstag und Bekanntmachung des Hinweises auf die Patenterteilung: **28.04.2021**
(21) Anmeldenummer: 05799760.3
(22) Anmeldetag: 03.11.2005
(51) Int. Cl.: F16H 61/02, F16H 59/08

(54) **VORRICHTUNG ZUM STEUERN EINES AUTOMATISCH SCHALTENDEN GETRIEBES**
DEVICE FOR CONTROLLING AN AUTOMATIC GEARBOX
DISPOSITIF DE COMMANDE D'UNE BOITE DE VITESSES AUTOMATIQUE

(30) Priorität: 30.11.2004 DE 102004057724
(43) Veröffentlichungstag der Anmeldung: 22.08.2007
(73) Patentinhaber: Bayerische Motoren Werke Aktiengesellschaft, 80809 München (DE)
(72) Erfinder: GUETER, Christian, 80687 München (DE)
(86) Internationale Anmeldenummer: PCT/EP2005/011742
(87) Internationale Veröffentlichungsnummer: WO 2006/058593

(56) Entgegenhaltungen:
- WO-A-2004/081417
- WO-A-2005/121605
- DE-A1- 3 201 440

## Beschreibung

Die Erfindung bezieht sich auf eine Vorrichtung zum Steuern eines automatisch schaltenden Getriebes nach dem Oberbegriff des Patentanspruchs 1.

Eine derartige Vorrichtung ist beispielsweise aus der DE 197 36 406 A1 bekannt. Diese bekannte Vorrichtung weist eine erste Wähleinrichtung in Form eines Wählhebels auf, mit dem die in einem Automatikmodus einstellbaren Fahrstufen P, R, N, D festlegbar sind. Mit einer zweiten Wähleinrichtung in Form eines zwei Schalter aufweisenden Lenkrades sind in einem Manuellmodus die Gänge des Getriebes stufenweise manuell hoch- oder rückschaltbar. Die bekannte Vorrichtung weist ein elektronisches Getriebesteuergerät auf, das bei Automatikgetrieben oder automatisierten Handschaltgetrieben üblich ist. Die Grundidee der aus der DE 197 36 406 A1 bekannten Vorrichtung ist, dass mit Betätigen der zweiten Wähleinrichtung ausgehend vom Automatikmodus der Manuellmodus aktiviert wird. Dieser Manuellmodus wird beibehalten, bis Situationen erkannt werden, in denen der Automatikmodus wünschenswert ist, beispielsweise bis eine signifikante Beschleunigung erkannt wird. Dabei wird davon ausgegangen, dass bei einer Beschleunigung im Automatikmodus vorrangig eine Fahrerentlastung vorgesehen werden soll.

WO 2004/081417 zeigt eine Vorrichtung gemäß des Oberbegriffs des Patentanspruchs 1.

Es ist Aufgabe der Erfindung, eine Vorrichtung zum Steuern eines automatisch schaltenden Getriebes im Hinblick auf eine vom Fahrer stärker zu beeinflussende gewünschte Fahrdynamik zu verbessern.

Diese Aufgabe wird erfindungsgemäß durch die Merkmale des Patentanspruchs 1 gelöst. Vorteilhafte Weiterbildungen sind die Gegenstände der abhängigen Patentansprüche.

Mit der erfindungsgemäßen Vorrichtung wird insbesondere durch entsprechende Programmierung des elektronischen Steuergeräts bei einer detektierten positiven Längsbeschleunigung ein manueller Eingriff des Fahrers höher priorisiert als die Maßnahmen, die gemäß einem Automatikmodus vorgenommen werden würden. Die Erfindung ist besonders relevant bei spontanen Rückschaltungen für Überholvorgänge.

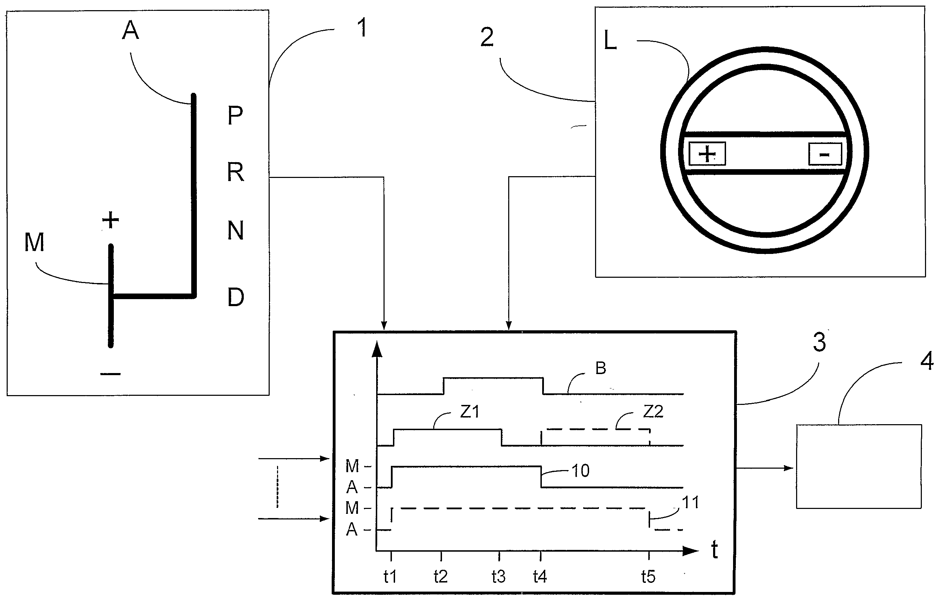

Die Erfindung wird mit einem Ausführungsbeispiel näher erläutert. Dazu ist in der Zeichnung ein Überblick über eine für die Erfindung vorteilhafte Gesamtanordnung dargestellt.

Sie zeigt eine Vorrichtung zum Steuern eines Automatikgetriebes 4 für ein Kraftfahrzeug mit einer ersten Wähleinrichtung 1 in Form eines nicht dargestellten Wählhebels, der in mindestens einer Gasse (erste Gasse) zur Festlegung der in einem Automatikmodus A einstellbaren Fahrstufen P,R,N, und D bewegbar ist. Weiterhin ist eine zweiten Wähleinrichtung 2 in Form eines Hochschalttasters (+ Taster) und eines Rückschalttasters (- Taster) dargestellt, durch die in einem Manuellmodus M die Gänge des Getriebes stufenweise manuell hoch- oder rückschaltbar sind, wenn ausgehend vom Automatikmodus A vor Betätigung der zweiten Wähleinrichtung 2 ein anderes Bedienelement, hier die Wähleinrichtung 1, zur Umschaltung in den Manuellmodus M betätigt wurde. Im dargestellten Beispiel muss zur Umschaltung in den Manuellmodus M die Wähleinrichtung 1 zumindest in die zweite Gasse bewegt werden, in der ebenfalls mit einem Hoch- und Rückschalttaster die Gänge des Getriebes stufenweise manuell hoch- oder rückschaltbar sein können.

Weiterhin ist ein elektronisches Steuergerät 3 vorhanden, das verschiedene Eingangssignale, einschließlich der Signale der Wähleinrichtungen 1 und 2, erhält. Abhängig von diesen Eingangssignalen werden mittels einer programmierten Schaltlogik die Stellelemente des Automatikgetriebes 4 zum Wechseln und Einlegen vorgegebener Gänge angesteuert.

Bei Betätigung der zweiten Wähleinrichtung 2 ohne vorheriger Betätigung des anderen Bedienelements 1, das zur dauerhaften Umschaltung in den Manuellmodus M vorgesehen ist, wird zunächst in den Manuellmodus M übergegangen und eine unmittelbare Hoch- bzw. Rückschaltung zugelassen. D. h. wenn ausgehend vom Automatikmodus A zu einem Zeitpunkt t1 der Hochschalttaster "+" betätigt wird, wird ein unmittelbarer Gangwechsel in den nächst höheren Gang ausgeführt und wenn ausgehend vom Automatikmodus A zu einem Zeitpunkt t1 der Rückschalttaster "-" betätigt wird, wird ein unmittelbarer Gangwechsel in den nächsten niedrigeren Gang ausgeführt.

Daraufhin wird nach dem Übergang in den Manuellmodus M im Steuergerät 3 zum Zeitpunkt t1 ein erstes Zeitfenster Z1 gestartet. Das Steuergerät 3 prüft in einem Prüfvorgang, ob innerhalb dieses ersten Zeitfensters Z1 ein positiver Längsbeschleunigungsvorgang B zumindest beginnt, also ob ein positiver Längsbeschleunigungsvorgang B bereits vorliegt oder beginnt. Im dargestellten Beispiel beginnt ein positiver Längsbeschleunigungsvorgang B zum Zeitpunkt t2. Das erste Zeitfenster Z1 endet zum Zeitpunkt t3, aber der positive Längsbeschleunigungsvorgang B hält noch bis zum Zeitpunkt t4 an. Zum Zeitpunkt t4 wird in einer ersten Alternative gemäß dem Verlauf 10 vom Manuellmodus M in den Automatikmodus A zurückgeschaltet. Wenn innerhalb des vorgegebenen ersten Zeitfensters Z1 kein positiver Längsbeschleunigungsvorgang B vorgelegen hätte, hätte das Steuergerät 3 zum Zeitpunkt t3 in den Automatikmodus A zurückgeschaltet. Bei erneuter Betätigung der zweiten Wähleinrichtung 2, beispielsweise des Rückschalttasters "-" innerhalb des ersten Zeitfensters Z1 oder während des positiven Längsbeschleunigungsvorganges B wird ein weiterer Gangwechsel im Manuellmodus M durchgeführt und der Prüfvorgang und damit das erste Zeitfenster Z1 neu gestartet.

In einer zweiten erfindungsgemäßen Alternative gemäß dem Verlauf 11 wird nach dem Ende eines positiven Längsbeschleunigungsvorganges B (hier zum Zeitpunkt t4) ein zweites Zeitfenster Z2 gestartet, in dem abgewartet wird, ob ein weiterer positiver Längsbeschleunigungsvorgang B beginnt. Das zweite Zeitfenster Z2 kann die gleiche Länge haben kann wie das erste Zeitfenster Z1. Tritt kein weiterer Längsbeschleunigungsvorgang B innerhalb des zweiten Zeitfensters Z2 auf wird am Ende des zweiten Zeitfensters Z2 zum Zeitpunkt t5 in den Automatikmodus A zurückgeschaltet. Würde innerhalb des zweiten Zeitfensters Z2 ein neuer positiver Längsbeschleunigungsvorgang B starten, würde nach dem Ende dieses weiteren Längsbeschleunigungsvorganges B ein drittes Zeitfenster gestartet werden. Diese wiederholten zeitfensterbezogenen Prüfvorgänge stellen sicher, dass ein kurzes Loslassen des Fahrpedals bzw. eine kurze Unterbrechung eines positiven Längsbeschleunigungsvorganges B nicht zu unkomfortablen Pendelschaltungen führt. Vom Manuellmodus M in den Automatikmodus A wird also spätestens dann zurückgeschaltet, wenn innerhalb eines dem ersten Zeitfenster Z1 folgenden Zeitfensters Z2 usw. bzw. wenn innerhalb eines durch das Ende einer positiven Längsbeschleunigungsvorganges B startenden Zeitfensters kein positiver Längsbeschleunigungsvorgang (B) mehr begonnen hat.

Bei erneuter Betätigung der zweiten Wähleinrichtung 2, beispielsweise des Rückschalttasters "-" innerhalb des zweiten oder folgenden Zeitfensters oder während eines weiteren positiven Längsbeschleunigungsvorganges B wird ein weiterer Gangwechsel im Manuellmodus M durchgeführt und der gesamte Prüfvorgang und damit das erste Zeitfenster Z1 neu gestartet.

Durch diese erfindungsgemäße Vorrichtung wird einerseits dem Leistungswunsch des Fahrers und andererseits auch den Anforderungen an optimalen Komfort im Hinblick auf eine leichte Bedienbarkeit Rechnung getragen.

## Patentansprüche

1. Vorrichtung zum Steuern eines automatisch schaltenden Getriebes für ein Kraftfahrzeug mit einer ersten Wähleinrichtung, mit der zumindest die in einem Automatikmodus einstellbaren Fahrstufen festlegbar sind, mit einer zweiten Wähleinrichtung, durch die in einem Manuellmodus die Gänge des Getriebes stufenweise manuell hoch- oder rückschaltbar sind, und mit einem elektronischen Steuergerät, das abhängig von den Signalen der Wähleinrichtungen und weiteren Eingangssignalen die Stellglieder des Getriebes ansteuert, wobei das Steuergerät derart ausgestaltet ist, dass bei Betätigung der zweiten Wähleinrichtung ausgehend vom Automatikmodus unmittelbar ein angeforderter Gangwechsel im Manuellmodus (M) durchgeführt wird, wobei das Steuergerät (3) weiterhin derart ausgestaltet ist, dass nach Betätigung der zweiten Wähleinrichtung (2), die ausgehend vom Automatikmodus (A) zu einem unmittelbaren Gangwechsel im Manuellmodus (M) geführt hat, ein Prüfvorgang gestartet wird, ob innerhalb eines vorgegebenen ersten Zeitfensters (Z1) ein positiver Längsbeschleunigungsvorgang (B) vorliegt oder beginnt,
und dass vom Manuellmodus (M) in den Automatikmodus (A) zurückgeschaltet wird, wenn innerhalb des ersten vorgegebenen Zeitfensters (Z1) kein positiver Längsbeschleunigungsvorgang (B) vorlag oder begonnen hat
und dass, wenn innerhalb des ersten vorgegebenen Zeitfensters (Z1) ein positiver Längsbeschleunigungsvorgang (B) vorlag oder begonnen hat, vom Manuellmodus (M) in den Automatikmodus (A) dann zurückgeschaltet wird, wenn ein positiver Längsbeschleunigungsvorgang (B) beendet ist und zumindest innerhalb eines zweiten an das Ende des vorhergehenden Längsbeschleunigungsvorganges (B) anschließenden Zeitfensters (Z2) kein neuer Längsbeschleunigungsvorgang (B) begonnen hat, **dadurch gekennzeichnet, dass** vom Manuellmodus (M) in den Automatikmodus (A) spätestens dann zurückgeschaltet wird, wenn innerhalb eines dem ersten Zeitfenster (Z1) folgenden Zeitfensters kein positiver Längsbeschleunigungsvorgang (B) mehr begonnen hat.

2. Vorrichtung nach Patentanspruch 1, **dadurch gekennzeichnet, dass** bei erneuter Betätigung der zweiten Wähleinrichtung (2) innerhalb eines vorgegebenen Zeitfensters (Z1; Z2) oder während eines positiven Längsbeschleunigungsvorganges (B) ein weiterer Gangwechsel durchgeführt wird und der Prüfvorgang neu gestartet wird.

3. Vorrichtung nach einem der vorangegangenen Patentansprüche, **dadurch gekennzeichnet, dass** zur dauerhaften Umschaltung in den Manuellmodus (M) vor Betätigung der zweiten Wähleinrichtung (2) ein anderes Bedienelement (1) betätigt werden muss.

## Claims

1. Apparatus for controlling an automatically shifting gearbox for a motor vehicle, comprising a first selector device with which at least the driving stages which can be set in an automatic mode can be defined, comprising a second selector device by way of which the gears of the gearbox can be manually shifted up or shifted down in steps in a manual mode, and comprising an electronic controller which drives the actuators of the gearbox depending on the signals of the selector devices and further input signals, wherein the controller is configured in such a way that, when operating the second selector device starting from the automatic mode, a requested gear change is directly carried out in the manual mode (M), wherein the controller (3) is further configured in such a way that, after operation of the second selector device (2) which has led to a direct gear change in the manual mode (M) starting from the automatic mode (A), a checking process is started in respect of whether a positive longitudinal acceleration process (B) is present or beginning within a prespecified first time window (Z1),
and such that a shift is effectuated back from the manual mode (M) to the automatic mode (A) if no positive longitudinal acceleration process (B) was present or has begun within the first prespecified time window (Z1), and such that, if a positive longitudinal acceleration process (B) was present or has begun within the first prespecified time window (Z1), a shift is effectuated back from the manual mode (M) to the automatic mode (A) when a positive longitudinal acceleration process (B) is terminated and no new longitudinal acceleration process (B) has begun at least within a second time window (Z2) which follows the end of the preceding longitudinal acceleration process (B),
**characterized in that**
a shift is effectuated from the manual mode (M) to the automatic mode (A) at the latest when no positive longitudinal acceleration process (B) has begun any longer within a time window which follows the first time window (Z1).

2. Apparatus according to Patent Claim 1, **characterized in that** a further gear change is carried out and the checking process is restarted each time the second selector device (2) is operated again within a prespecified time window (Z1; Z2) or during a positive longitudinal acceleration process (B).

3. Apparatus according to either of the preceding claims, **characterized in that** another operator control element (1) has to be operated before operation of the second selector device (2) for permanently shifting over to the manual mode (M).

## Revendications

1. Dispositif de commande d'une transmission à changement de vitesse automatique destiné à un véhicule automobile, ledit dispositif comprenant un premier moyen de sélection permettant de définir au moins les crans de marche réglables en mode automatique, un deuxième moyen de sélection permettant le passage manuel aux vitesses supérieures ou inférieures de la transmission graduellement en mode manuel et une unité de commande électronique qui commande les actionneurs de la transmission en fonction des signaux des moyens de sélection et d'autres signaux d'entrée, l'unité de commande étant conçue de manière à ce que, lorsque le deuxième moyen de sélection est actionné à partir du mode automatique, un changement de vitesse demandé est directement effectué en mode manuel (M), l'unité de commande (3) étant en outre conçue de façon à lancer, après l'actionnement du deuxième moyen de sélection (2) qui est passé du mode automatique (A) à un changement de vitesse immédiat en mode manuel (M), un processus de contrôle pour déterminer si un processus d'accélération longitudinale positive (B) est présent ou commence dans une première fenêtre temporelle spécifiée (Z1),
et de façon à commuter de nouveau du mode manuel (M) au mode automatique (A) si aucun processus d'accélération longitudinale positif (B) n'était présent ou n'a commencé dans la première fenêtre de temps spécifiée (Z1),
et de façon à commuter de nouveau, si un processus d'accélération longitudinale positif (B) était présent ou a commencé dans la première fenêtre de temps spécifié (Z1), du mode manuel (M) au mode automatique (A) lorsqu'un processus d'accélération longitudinale positif (B) est terminé et qu'aucun nouveau processus d'accélération longitudinale (B) n'a commencé au moins dans une deuxième fenêtre temporelle (Z2) qui fait suite à la fin du processus d'accélération longitudinale précédent (B),
**caractérisé en ce que**
une nouvelle commutation du mode manuel (M) au mode automatique (A) est effectuée au plus tard lorsqu'aucun processus d'accélération longitudinale positif (B) n'a plus commencé dans une fenêtre temporelle suivant la première fenêtre temporelle (Z1).

2. Dispositif selon la revendication 1,
**caractérisé en ce que**, lorsque le deuxième moyen de sélection (2) est à nouveau actionné dans une fenêtre temporelle spécifiée (Z1 ; Z2) ou pendant un processus d'accélération longitudinale positif (B), un autre changement de vitesse est effectué et le processus de contrôle est redémarré.

3. Dispositif selon l'une des revendications précédentes, **caractérisé en ce qu'**un autre élément de commande (1) doit être actionné avant l'actionnement du deuxième moyen de sélection (2) pour commuter de manière permanente en mode manuel (M).
